# EUROPEAN PATENT SPECIFICATION

(11) **EP 4 619 345 B1**
(45) Date of publication and mention of the grant of the patent: **05.08.2026**
(21) Application number: 23829170.2
(22) Date of filing: 16.11.2023
(51) Int. Cl.: C02F 9/00, C02F 1/00, C02F 1/38, C02F 1/52, C02F 1/66, C02F 1/72, C02F 101/36

(54) **PRETREATMENT OF PFAS-CONTAMINATED WATER PRIOR TO PFAS DESTRUCTION**
VORBEHANDLUNG VON MIT PFAS VERUNREINIGTEM WASSER VOR PFAS ZERSTÖRUNG
PRÉTRAITEMENT D'EAU CONTAMINÉE PAR DES SUBSTANCES PERFLUOROALKYLÉES AVANT LEUR DESTRUCTION

(30) Priority: 16.11.2022 US 202263426022 P
(43) Date of publication of application: 24.09.2025
(73) Proprietor: Revive Environmental Technology, LLC, Columbus, OH 43201 (US)
(72) Inventor: DEJARME, Lindy, E., Columbus, OH 43201 (US); DASU, Kavitha, Columbus, OH 43201 (US); ROSANSKY, Stephen, H., Columbus, OH 43201 (US)
(74) Representative: Zeuner Summerer Stütz
(86) International application number: PCT/US2023/080176
(87) International publication number: WO 2024/108066

(56) References cited:
- WO-A1-2020/247029
- US-B2- 11 407 666
- MARRONE P A ET AL: "Salt precipitation and scale control in supercritical water oxidation-part B: commercial/full-scale applications", THE JOURNAL OF SUPERCRITICAL FLUIDS, ELSEVIER, AMSTERDAM, NL, vol. 29, no. 3, 1 May 2004 (2004-05-01), pages 289 - 312, XP004503726, ISSN: 0896-8446, DOI: 10.1016/S0896-8446(03)00092-5

## Description

### Related Applications

This application claims the priority benefit of U.S. Patent Application Ser. No. 63/426,022 filed 16 November 2022.

### Introduction

For the continuous operation for SCWO based systems, such as the PFAS Annihilator^{™}, salts are unwanted components as they precipitate under supercritical conditions and may clog the fluid pathway of the system. In addition, cations in solution may form salts with PFOS and its analogs, leading them to precipitate out of solution before being destroyed. A salt separator was installed in the PFAS Annihilator^{™} system to remove salts that enter the system and allow for continuous operation without clogging. The salt separator is typically located such that temperatures reach supercritical within the salt separator and salts precipitate out within the separator prior to the influent flowing through the reactor for organics destruction. This approach has been successful at removing salt, as demonstrated by 90% removal by mass of sodium and chloride. However, salts in the system have caused precipitation of PFOS and its congeners as well, up to 25% by mass, preventing them from being destroyed in the reactor.

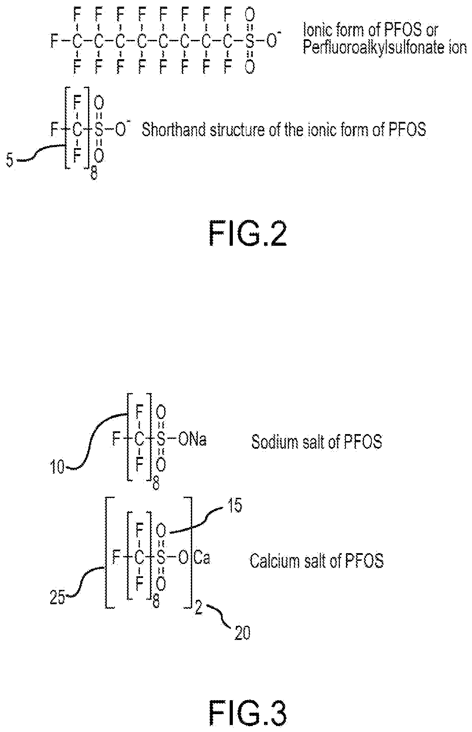

In test runs where calcium and magnesium were present, analyzed PFAS compounds were present in the salt separator to a much greater degree than test runs where sodium was a more dominant salt cation. Therefore, it is important to remove these divalent cations before entering the system to prevent PFOS salt precipitation and allow a greater mass of PFOS and its congeners to be destroyed by continuing to the reactor. Divalent cations, such as calcium, increase the magnitude of PFOS and its congeners salting out of solution, as two moles of PFOS could form a salt per one mole of calcium (see Figure 2), rather than just one mole of PFOS with sodium.

Basic influent solutions present greater challenges regarding PFOS precipitation as PFOS and its congeners are highly ionizable in basic solutions. Hydrochloric acid has been utilized to neutralize an influent solution and destroy calcium carbonate; however, calcium chloride was then formed which is soluble in water, and thus was not able to be filtered out prior to entering the Annihilator^{™} system, leading to a system clog. Organic acids such as acetic acid provide acidity to solutions. However, organic acids are not oxidative and are gentler acids than mineral acids. By adding acetic acid to the influent and subsequently adding sodium fluoride to form insoluble calcium and magnesium fluoride, the fluoride salts could then be filtered out of the solution prior to entering a system under supercritical conditions, preventing a clog from forming, while also providing an acidified solution to further prevent PFOS salting out with remaining sodium ions.

### Summary of the Invention

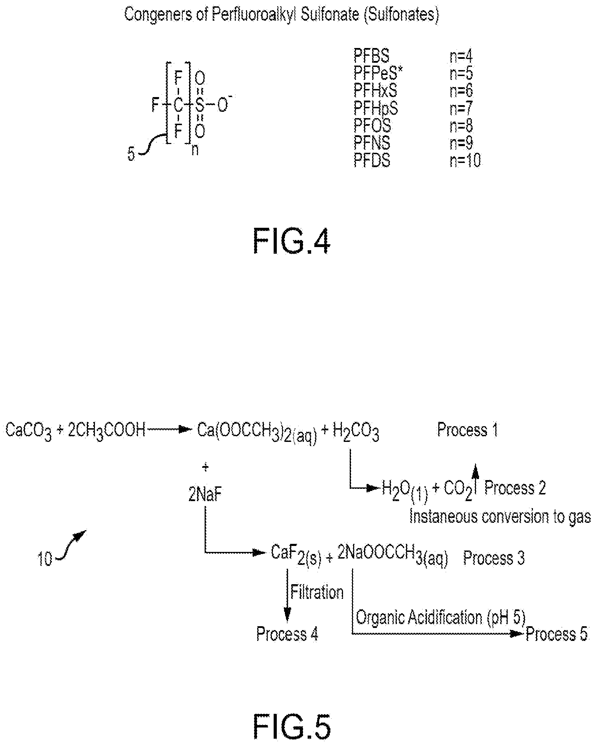

To prevent precipitation of PFOS and its congeners as well as salt plugging, acidification of a PFAS solution with acetic acid and subsequent sodium fluoride addition provides a solution by allowing calcium and magnesium to form insoluble salts that could be separated out of solution prior to SCWO treatment as well as lowering the pH to further prevent PFOS salt formation. After fluoride salt separation, the sample may be further acidified to a pH of 5 (see Figure 5). The organic acids will keep the PFOS and its congeners in solution ensuring that they all get to the SCWO reactor for destruction.

In one aspect, the invention provides a method of destroying PFAS, comprising: adding an organic acid to PFAS-containing water comprising Ca or Mg or both Ca and Mg to form an acidified solution; combining the acidified solution with sodium fluoride; wherein the step of combining results in an aqueous mixture comprising PFAS and a precipitate comprising calcium fluoride (CaF₂) or magnesium fluoride (MgF₂); separating the precipitate from the aqueous mixture to form a Ca, Mg reduced salt solution; and subjecting the Ca, Mg reduced salt solution to supercritical water oxidation (SCWO). The phrase "a precipitate comprising calcium fluoride (CaF₂) or magnesium fluoride (MgF₂)" includes combination of CaF₂ and MgF₂ and a mixed fluoride salt of Ca and Mg.

The invention also includes a method of destroying PFAS, comprising: treating an aqueous PFAS solution (typically a concentrated solution) with an organic acid and/or treating the solution with NaF to form a precipitate of Ca or Mg fluoride (this could be calcium fluoride (CaF₂) or magnesium fluoride (MgF₂) or a mixed fluoride salt of Ca and Mg) and subjecting the resulting treated aqueous PFAS solution to hydrothermal oxidation or SCWO. Hydrothermal conditions comprise oxidation in liquid water at temperatures of at least 120 °C, or at least 150 °C, or at least 200 °C, or at least 300 °C and up to 374 °C (hydrothermal conditions are subcritical, liquid phase conditions). This aspect of the invention can be combined with one or any combination of the features described herein.

In another aspect, the invention comprises a system for destroying PFAS, comprising:
a vessel comprising PFAS-contaminated water, dissolved NaF, and solid Ca or Mg fluoride (this could be calcium fluoride (CaF₂) or magnesium fluoride (MgF₂) or a mixed fluoride salt of Ca and Mg).

The invention also includes compositions created by the method and/or described herein. The invention also includes apparatus as described here. The invention further includes systems comprising both apparatus plus any of the compositions or conditions described herein.

Various aspects of the invention are described using the term "comprising;" however, in narrower embodiments, the invention may alternatively be described using the terms "consisting essentially of" or, more narrowly, "consisting of."

### Brief Description of the Drawings

Fig. 1 is a schematic illustration of a water pretreatment system for treating PFAS-contaminated water prior to passage through a SCWO reactor.
Figure 2. PFOS Ionic Structure Representations
Figure 3. Sodium and Calcium Salts of PFOS
Figure 4. Congeners of PFOS
Figure 5. Processes for calcium removal utilizing acetic acid and sodium fluoride

### Detailed Description of the Invention

According to the present invention, PFAS-contaminated water has the conventional meaning. Since the inventive methods are capable of reducing the concentration of PFAS to less than 5 ppt, the method can be applied to solutions containing greater than 5 ppt, more typically, at least 1 ppm. The source of the PFAS-contaminated water can be from soil or surface or underground water in areas subjected to PFAS contamination. These areas can be industrial areas such as the electronics industry (e.g., wire/cable coatings and semi-conductor board fabrication), leachates from waste facilities, and especially where water-proofing or non-stick coatings have been applied. Another common source of PFAS-contaminated water is in areas around airfields or firefighting training areas that have been exposed to AFFF (aqueous film forming foam). Another source can be storage vessels, typically these sources are accumulated for future destruction or disposal. Typically, there will be non-fluorinated organic compounds present in PFAS-contaminated water and, especially in AFFF residue, there can be chlorinated or brominated compounds.

The destruction of PFAS via Supercritical Water Oxidation (SCWO) has been described by Rosansky et al. in US Patent 11,407,666.

Initially, water or soil samples may be treated to concentrate PFAS in a substantially reduced volume. In some instances, the PFAS-containing media has been stored in a concentrated form and does not require additional treatment to concentrate it. The concentrated PFAS mixtures can be put in containers and shipped to a centralized site for PFAS destruction. Alternatively, in some preferred embodiments, the concentrated PFAS mixtures are treated onsite where they originate. The concentrated PFAS solution can be destroyed by Supercritical Water Oxidation (SCWO), which can rapidly result in over 100,000 times reduction in PFAS concentration, for example, a reduction in PFOA from 1700 parts per million (ppm) to 5 parts per trillion (ppt) by weight or less. To enable efficient destruction with little or no external heat supply during steady state operation, fuels may be added (or, in some occurrences, PFAS may be present with sufficient organic materials that serve as the fuel) to supply some or all of the heat needed to power the oxidation. The resulting effluent can then be confirmed to contain little or no PFAS, typically 5 ppt or less, and then be released back into the environment as safe, clean water.

PFAS-contaminated water can be concentrated by any known means. For example, passing PFAS-contaminated water into a tank, wherein the water is super-saturated with air; wherein pressure in the tank is relatively low such that bubbles are generated in the water and create a foamed mixture; and collecting the foamed mixture. The use of dissolved air floatation (DAF) facilitates removal of PFAS. The principle of DAF is to produce micro-bubbles (appearing as cloudy water) inside a treatment cell by first creating what is known as white water, which is pressurized water (typically to pressures of approximately 75 pounds per square inch gauge [psig] (5,17 bar)) that is saturated with air (nitrogen and oxygen). Once the white water enters an atmospheric pressure environment, the water becomes supersaturated with air and thus the air drops out of solution creating micro-bubbles. Unlike bubbling air into a tank, these bubbles would be so fine that they would essentially occupy the entire floatation chamber and would rise very slowly allowing much greater contact between air and PFAS than what could be achieved via aeration/air sparging. In addition, a very low volume of air would be introduced into the cell in comparison to what would be injected in a sparging application. This allows the PFAS to be "scrubbed" and gently floated to the top of the chamber.

### Pretreatment

Debris and other solids can be removed from the PFAS-contaminated water prior destruction of the PFAS. Typically, this can be accomplished by one or a plurality of filtration steps. In some embodiments, a plurality of filtration steps can be conducted in which increasingly smaller particles are removed. The filters can be valved so that only one or a series of filters can be utilized; for example one filter or a set of filters can be cleaned or exchanged while another filter or set of filters continue to operate. Filters can be any type of filter known for filtering water such as bag filters, cartridge filters, metal screen or sand (preferably silica sand). Alternatively, or in addition, centrifugal separation can be used to remove solids.

The PFAS-contaminated water can be subjected to a softening treatment to remove undesired counterions (typically Ca and Mg) because these foul the RO membrane. These softening treatments may include one or any combination of the following: ion exchange resin, lime softening (aqueous calcium hydroxide to precipitate solids); chelating agents (for example, treatment with EDTA or the like); and reverse osmosis. In any pretreatment, capture of PFAS in pretreatment media should be considered. Alternatively, or in addition, compounds such as organics can be removed by passage through hydrophobic clay to remove separated and/or emulsified hydrocarbons.

Reverse osmosis (RO) systems can remove or concentrate PFAS from water streams. PFAS-free (or PFAS-reduced) water travels through the membrane while the PFAS and salts are directed to a brine stream. Efficiency of PFAS removal and throughput is increased by implementing a cascade of RO membranes. In some embodiments, RO is utilized to increase the concentration of PFAS by at least 5 times or at least 10 times, and in some embodiments in the range of 5 to 30 times or 5 to 20 times, or 10 to 40 times. In some preferred embodiments, the influent to RO preferably has a total dissolved solids to 1200 ppm or less; however, other systems comprising larger pumps and tighter wound membranes can handle much higher TDS and achieve effective concentration in accordance with the present invention, chlorine levels of 0.5 ppm or less more preferably 0.1 ppm or less, pH between 1 and 12, more preferably between 2 and 11, the substantial absence of oil or grease, very low levels of Ba and Si (if present initially, these can be removed in a water softening step); a flowrate depending on the scale required, in some embodiments, the RO will be conducted in a range of about 3 to 5 gallons (11 L to 19 L) per minute.

### Illustrated System

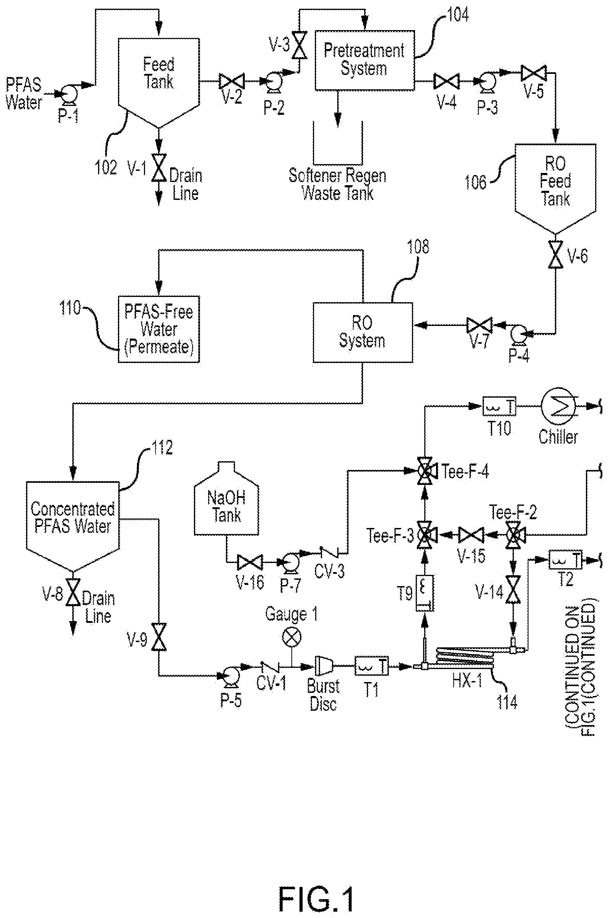

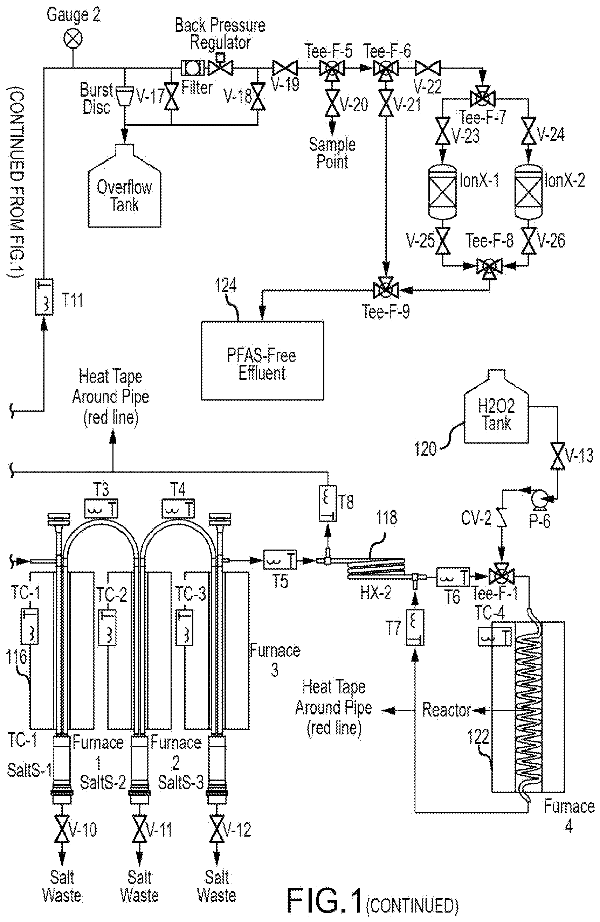

A preferred embodiment of the invention is schematically illustrated in Figure 1. PFAS contaminated water entering the system can be subjected to numerous optional pretreatments including one of more of: filtration (not shown) storage in tank 102, a water softening pretreatment 104, a feed tank 106 connected to a reverse osmosis system 108. Water softening to replace other cations with sodium cations can be conducted by conventional means such as passage through an ion exchange resin. The reverse osmosis treatment (described above) produces a permeate 100 having PFAS concentrations that are reduced 10X, 100X, 1000X, 10,000X or more as compared to the PFAS contaminated water entering the system. In some cases, especially with relatively concentrated PFAS solution entering the system, the permeate can be subjected to additional RO treatment to bring the PFAS levels in the permeate down to a low level, such as below 70 ppt, where the water can be released to the environment; the retentate from the additional treatments can be combined with the concentrated solution or combined with incoming PFAS contaminated water such as in tank 102.

The retentate 112 typically comprises an aqueous solution having a PFAS concentration that is 10X, 100X, 1000X, 10,000X or more as compared to the PFAS contaminated water entering the system. Thus, the invention provides an energy efficient system in which greater than 90% or 99% or 99.9% or more of the PFAS in PFAS contaminated water is completely destroyed. Thus, in a preferred PFAS destruction process only 10%, or only 1%, or only 0.1%, or only 0.01% or less of the water in the PFAS contaminated water is heated to SCWO conditions.

The concentrated PFAS water can be passed through optional heat exchanger 114 which can be a tube-in-tube heat exchanger.

The concentrated PFAS water 112 passes into salt separator 116. The salt separator can have a plurality of zones that operate at different conditions of temperature or pressure. The tubes can be heated by a tube furnace that surrounds the tubes. In the case of a plurality of vertical tubes (six shown in Fig. 1, three upward and three downward) can have a relatively large inner diameter - for example, at least 1.5 cm or at least 2.0 cm or at least 1 inch (2.4 cm) - to prevent plugging. At the bottom (with respect to gravity) of each salt separator tube is a larger diameter container (collector vessel 220), preferably having an inner diameter of at least 5 cm, or at least 10 cm, or in the range of 5 to 20 cm. Preferably the collection vessel includes a diameter that is at least two times or at least four times larger than the inlet tube. The collection vessel can be heated; for example by electrical tape. The collector vessel(s) connect the inlet and outlet, preferably have a depth of at least 20 cm, or at least 30 cm, or at least 40 cm, and in some embodiments in the range of 25 to 75 cm. Salt forming in the inlet tube falls into the collection vessel where is can be continuously, or more typically, periodically removed and, if necessary, treated to remove PFAS or other contaminants. Toward the bottom of the collector vessels there is preferably a valve leading to a drain to remove brine or a briny slurry that collects at the bottom of the collector vessel. Optionally, a pump assembly can be used to evacuate the contents of the collector vessel at high pressure during operation. In some preferred embodiments, a salt separator tube inlet 222 (carrying fluid into the collector tube) extends into the collector vessel by at least 5 cm or at least 10 cm (relative to the outlet into an upward flowing tube); this enhances downward flow of the saltier fraction into the bottom of the collector tube forcing the lighter fraction out of the outlet 224. The collector vessel(s) may contain baffles to minimize turbulence and mixing near the bottom of the collector vessel(s). Typically, conditions in the bottom of the collection vessel are subcritical.

The concentrated PFAS water 112 typically enters the salt separator at subcritical but preferably near supercritical conditions so that the salt is completely dissolved in the water allowing greater residence time for salt to fall out of solution and fall into the collection vessel.. Alternatively, the water 112 can enter the salt separator at supercritical conditions. In the salt separator temperature is increased so that the solution becomes supercritical and sodium chloride and other salts precipitate from solution. Conditions (typically temperature) in successive zones of the salt separator can be controlled so that the salt becomes increasingly insoluble as it travels through the salt separator. In some embodiments, the solution entering the salt separator can be below 370 °C and increased in the range of 375 to 450 °C in the salt separator. Optionally, a fuel, such as an alcohol, could be added prior to or during the salt separation stage in order to increase temperature.

Water can pass through a heat exchanger 118 and then is typically combined with an oxidant 120, such as hydrogen peroxide, prior to introduction into SCWO reactor 144 where any remaining PFAS is destroyed. Although in the figure provided, peroxide (or other oxidant) can be added is introduced immediately before the reactor, we more than likely will have the option to add the peroxide at various locations, including upstream of the salt separator. The advantages of adding oxidant in a plurality of locations include 1) minimizing the potential for a hot spot at the location where the peroxide is added, and 2) facilitating destruction of PFAS in the salt separator. However, a disadvantage of adding peroxide upstream of the salt separators is that corrosion can be exacerbated. The PFAS-free effluent can be passed through heat exchanger(s) such as 118, 114 to recover heat and then stored or passed out of the system as PFAS-free effluent 124.

The clean effluent preferably passes back through the second and first heat exchangers. At any point after the SCWO reactor, the cleaned water is preferably neutralized, such as by addition of sodium hydroxide. Also, if necessary, the cleaned water can be treated (for example to remove Cr or other metals) prior to disposal or return to the environment.

The invention provides an energy efficient method of destroying PFAS that is optionally characterized by the steps of reverse osmosis and salt separation followed by oxidation in a SCWO reactor; and optionally characterizable wherein the aqueous solution comprising water and PFAS has a first volume; wherein 10% or less (or 5% or less, or 1% or less, or 0.1% or less) of the first volume is subjected to supercritical conditions; and wherein, in said method, at least 95% (or at least 98% or at least 99%) of the PFAS in the first volume is destroyed in supercritical conditions.

Any of the inventive aspects may be further defined by one or any combination of the following: wherein the method is carried out in a mobile trailer; the PFAS-containing aqueous mixture comprises at least 100 ppm PFAS and the method decreases the PFAS concentration by at least 10⁶ or 10⁷ or 10⁸; wherein the PFAS is reacted with oxidant in an oxidation reactor and after leaving the reactor the effluent is treated with a solution comprising NaOH, LiOH, or KOH to produce a neutralized solution that can be discharged or recycled to neutralize additional effluent; wherein the neutralized effluent is at least partially evaporated into the air; wherein by taking a PFAS-concentration wherein the PFAS-containing aqueous mixture comprises at least 100 ppm PFAS by weight (in some embodiments at least 500 ppm or at least 1000 ppm PFAS) that the method converts to an effluent comprising 1 ppm or less, or 0.1 ppm or less, or 0.01 ppm or less, or 1.0 ppb or less, or 0.1 ppb or less, or 0.01 ppb or less PFAS; in some embodiments in the range of 1 ppm to 5 ppt (part per trillion) PFAS or less; wherein the PFAS-containing solution is mixed with a solution comprising 30 to 50 wt% H₂O₂ at a weight ratio of preferably 30:1 to 70:1 wt% ratio PFAS solution:H₂O₂; wherein the PFAS-containing solution is passed through a SCWO reactor with a residence time of 20 sec or less, preferably 10 sec, or 5 sec or less, or 0.5 to 5 seconds; wherein the PFAS-containing solution is added at a rate controlled between 50 and 150 mL/min (at STP); wherein no external heating is required after start-up; wherein the PFAS-containing aqueous mixture comprises at least 100 ppm PFOA and the method decreases the PFOA concentration by at least 10⁶ or 10⁷ or 10⁸, and in some embodiments up to about 10⁹ ; wherein the method is conducted in a mobile trailer; wherein the method is conducted in a mobile trailer at a PFAS-contaminated site.

Any of the inventive methods may be further defined by, in the overall process, or the SCWO portion of the process, can be characterized by converting a PFAS-concentration of at least 100 ppb PFAS by weight (in some embodiments at least 500 ppb or at least 1000 ppb PFAS) to 1 ppb or less, or 0.1 ppb or less, or 0.01 ppm or less or 7 ppt or less. Alternatively, by converting a PFOA-concentration of at least 100 ppb PFOA by weight (in some embodiments at least 500 ppb or at least 1000 ppb PFOA) to 1 ppb or less, or 0.1 ppb or less, or 0.01 ppb or less, or 5.0 ppt or less PFOA; in some embodiments in the range of 1 ppm to 5 ppt (part per trillion) PFOA. Alternatively, by converting a PFOS-concentration of at least 100 ppb PFOS by weight (in some embodiments at least 500 ppb or at least 1000 ppb PFOS) to 1 ppb or less, or 0.1 ppb or less, or 0.01 ppb or less, or 5.0 ppt or less PFOS; in some embodiments in the range of 1 ppm to 5 ppt (part per trillion) PFOS. The process can also be characterized by the same levels of destruction beginning with a PFAS concentration of 1 ppm or more. In some embodiments, PFAS-contaminated water comprising at least 1000 ppt of at least one (or at least 3 or at least 4 or at least 5 or at least 6) compound selected from the group consisting of PFHxA (perfluorohexanoic acid), PFHpA (perfluoroheptanoic acid), PFOA, PFBS (perfluorobutane sulfonate), PFHxS (perfluorohexane sulfonate), PFHpS (perfluoroheptane sulfonate), and PFOS and combinations thereof, treated by the process is (are) reduced by at least 2 (or at least 3 or at least 4 or at least 5) orders of magnitude. In some embodiments, PFAS-contaminated water comprising at least 100 ppt of at least one (or at least 3 or at least 4 or at least 5 or at least 6) compound selected from the group consisting of PFBA (perfluorobutanoic acid), PFPeA (perfluoropentanoic acid), PFHxA, PFHpA, PFOA, 6:2 FTS (6:2 fluorotelomer sulfonate), and 8:2 FTS (8:2 fluorotelomer sulfonate) and combinations thereof, treated by the process is (are) reduced by at least 2 (or at least 3 or at least 4 or at least 5) orders of magnitude and/or reduced to 5 ppt (or 1 ppt) or less.

Leaving the SCWO reactor, the resulting clean water fraction can optionally be passed through adsorbent media such as activated carbon or ion exchange resin and returned to the environment. As with any of the aspects described herein, this pretreatment method may be used by itself or in combination with any of the other aspects or other techniques described herein.

The invention also includes apparatus for destroying PFAS comprising a SCWO reactor and any of the components described herein. The invention also includes a system for destroying PFAS comprising a SCWO reactor comprising a PFAS-containing aqueous mixture. The system may comprise any of the conditions and/or fluids described herein.

The PFAS solution (typically a concentrated PFAS solution) with or without reverse osmosis (RO) and with or without passage through a salt separator, a solution that has been treated with an organic acid and NaF to precipitate Ca or Mg and pass the Ca, Mg - depleted PFAS solution to a hydrothermal or SCWO reactor for destruction of the PFAS by oxidation.

Prior to addition of the organic acid, the PFAS-containing water preferably has a pH of 6.0 or greater (typically at least 6.5 or at least 6.8) and the addition of the organic acid lowers pH to 5.5 or less, or 5.2 or less, or in the range of 4.5 to 5.5, or in the range of 4.7 to 5.2. Typically, the PFAS-containing water comprising Ca or Mg comprises Ca. In some embodiments, the organic acid is added in plural addition steps with a separation step between addition steps. The "separating" step may comprise one or any combination of: filtering, centrifugation, or decanting. In some embodiments, the separated precipitate is washed and the wash solution is subjected to SCWO.

An "organic acid" is an organic compound with acidic properties. In some preferred embodiments, the organic acid has a pKa between 3.0 and 6.0, more preferably between 3.5 and 5.5. Organic acids are preferably carboxylic acids; examples include: formic acid, acetic acid, propionic acid, lactic acid, gluconic acid, and citric acid. A preferred acid is acetic acid.

The amount of added NaF can be optimized for a given sample. The amount can also be based on the concentration of Ca plus Mg present in the PFAS-containing water; for example the moles of NaF can be within 50% or within 25% of the moles of Ca + Mg or in a molar ratio Na/[Ca + Mg] of between 0.5 to 20, or 1 to 10, or 2.5 to 10.

### Supercritical Water Oxidation (SCWO)

PFAS-containing water is preferably heated prior (typically immediately prior) to entering the reactor. Heat from the reactor is used to heat water entering the reactor. The use of a heat exchanger makes the process more energy efficient, compact and extends service life of the reactor. A tube-in-tube heat exchanger is especially desirable. PFAS are destroyed and converted to carbonates, fluoride salts and sulfates. The device can be designed for 1) stationery applications or 2) transportation to a site. The stationery configuration can be employed at a permanent processing plant such as in a permanently installed water facility such as city water treatment systems. The portable units can be used in areas of low loading requirement where temporary structures are adequate. A portable unit is sized to be transported by a semi-truck or smaller enclosed space such as a trailer or shipping container. The design is adaptable to processing other organic contaminants by modifying operational parameters but without modification of the device.

A preferred SCWO reactor design is a continuous or semi-continuous system in which the (typically pre-treated) PFAS-containing aqueous solution is passed into a SCWO reactor. Because solids may form in the SCWO reactor, it is desirable for the reactor to slope downward so that solids are pulled by gravity downward and out of the reactor. In some embodiments, the flow path is straight and vertical (0°) with respect to gravity; in some embodiments, the reactor is sloped with respect to gravity, for example in the range of 5 to 70° (from vertical) or 10 to 50° or 10 to 30° or 10 to 20° and can have a bend so that flow moves in a reverse direction to provide a compact device in which flow is consistently downward with respect to gravity. Preferably, the reactor vessel is a cylindrical pipe formed of a corrosion resistant material. Desirably, the pipe has an internal diameter of at least 1 cm, preferably at least 2 cm and in some embodiments up to about 5 cm.

Flow through the components of the SCWO apparatus at supercritical conditions can be conducted under turbulent flow (Re of at least 2000, preferably in the range of 2500 to 6000). Effluent from the SCWO reactor can flow into a salt separator under supercritical conditions.

The SCWO system operates by raising the feed temperature and raising the feed pressure. The increased pressure can be due solely due to the heating (which is preferable) or can be further increased via a compressor or a high pressure (reciprocating) pump. The temperature is increased by: application of heat through the conduit (in the case of a continuous reactor) or through the reaction chamber in the case of a batch reactor, and/or by the addition of fuels such as alcohols or hydrocarbons that will be oxidized to generate heat in solution. Supercritical conditions are maintained for the oxidation; conditions within the reaction conduit or reaction chamber are preferably in the range of 374°C - 700 °C and at least 220 bar, more preferably 221 - 300 bar. In some embodiments, temperature in the SCWO reactor is maintained at 500 °C or more, or 600 °C or more and in the range of 500 to 650 °C, or 600 to 675 °C. The SCWO reactor is typically made of a high temperature resistive alloy. These alloys are useful for corrosion resistance at high temperature. In some preferred embodiments, the alloy comprises at least 50 wt% Ni and at least 5 wt% Cr. Suitable high temperature alloys are known in the SCWO art; one typical nickel-based alloy is Hastealloy^{®} C-276.

### Oxidants

The two tested feedstocks of reactant oxygen used in supercritical water oxidation for destruction of PFAS are oxygen gas (O₂) and hydrogen peroxide (H₂O₂). In addition to, or alternative to, these two chemical species, other reactant oxygen sources or oxidizing agents could be added to destroy PFAS in the oxidation reactor. Other oxidants may comprise oxyanion species, ozone, and peroxy acids.

The preferred oxidant is hydrogen peroxide which can be added in excess (for example an excess of at least 50% or at least 100% or in the range of 50% to 300% excess) and the excess hydrogen peroxide reacting to form dioxygen and water.

### Fuels

At start up, the SCWO apparatus requires heating such as by external flame or resistive heating. Unless the reactive solution comprises high concentrations of PFAS or other organics, external heating is also needed during operation. As an alternative, or in addition to external heating of the SCWO apparatus, heat can be provided by the oxidation of fuels such as alcohols. Preferred fuels include methanol, ethanol, propanol (typically isopropanol), or combinations of these.

### Handling The Fluorine By-Products From Destruction Of PFAS

The corrosive effluent from the SCWO reactor containing aqueous HF at high temperature (for example, around 600 °C) can flow into a mixing pipe. Cooling water, typically containing hydroxy salts, can be fed into a mixing pipe where it mixes with the corrosive effluent. The cooled effluent contains dissolved fluoride salts such as NaF.

### Post Treatment

Since the SCWO process destroys essentially all of the PFAS, the treated effluent can be safely released back into the environment. In some embodiments, at least a portion of the effluent is evaporated into the air. Precipitates such as fluoride salts can be filtered or centrifuged from the effluent. PFAS-free effluent can be passed through a heat exchanger where the effluent is cooled by the PFAS-contaminated water flowing into the reactor. If necessary, the effluent may be subjected to treatments such as reverse osmosis and/or other treatments (ion exchange resins or other adsorptive media) to remove metals or other contaminants prior to release or disposal of the effluent.

### Mobile Units

One example of a mobile unit is one that can be transported on (and preferably operated within) a trailer. For example, the system can be transported (and optionally operated) on a trailer having dimensions of 29 feet (8.8 m) in length or less, 8 ft 6 in (2.6 m) or less width, and 13 ft 6in (4.1 m) height or less. These dimensions define preferred size of a mobile system, although workers in this area will understand that other dimensions could be utilized in a mobile unit.

## Claims

1. A method of destroying PFAS, comprising:
adding an organic acid to PFAS-containing water comprising Ca or Mg or both Ca and Mg to form an acidified solution;
combining the acidified solution with sodium fluoride;
wherein the step of combining results in an aqueous mixture comprising PFAS and a precipitate comprising calcium fluoride (CaF₂) or magnesium fluoride (MgF₂);
separating the precipitate from the aqueous mixture to form a Ca, Mg reduced salt solution; and
subjecting the Ca, Mg reduced salt solution to supercritical water oxidation (SCWO).

2. The method of claim 1 wherein the PFAS-containing water has a pH of 6.0 or greater.

3. The method of claim 1 wherein the PFAS-containing water has a pH of at least 6.8.

4. The method of claim 1 wherein the step of adding an organic acid lowers pH to 5.5 or less.

5. The method of claim 1 wherein the step of adding an organic acid lowers pH in the range of 4.5 to 5.5.

6. The method of claim 1 wherein the step of adding an organic acid lowers pH in the range of 4.7 to 5.2.

7. The method of any of claims 1-6 wherein the step of adding an organic acid comprises a plurality of addition steps with a separation step between the addition steps.

8. The method of any of the preceding claims wherein the separating step comprises one or any combination of: filtering, centrifugation, or decanting.

9. The method of any of the preceding claims wherein the separated precipitate is washed and the resulting wash solution is subjected to SCWO.

10. The method of any of the preceding claims wherein the organic acid has a pKa between 3.0 and 6.0.

11. The method of claim 10 wherein the organic acid has a pKa between 3.5 and 5.5.

12. The method of any of the preceding claims wherein the organic acid comprises formic acid, acetic acid, propionic acid, lactic acid, gluconic acid, citric acid, or combinations thereof.

## Patentansprüche

1. Verfahren zum Zerstören von PFAS, umfassend:
Zugeben einer organischen Säure zu PFAS-haltigem Wasser, das Ca oder Mg oder sowohl Ca als auch Mg umfasst, um eine gesäuerte Lösung zu bilden;
Kombinieren der gesäuerten Lösung mit Natriumfluorid;
wobei der Schritt des Kombinierens ein wässriges Gemisch ergibt, das PFAS und ein Präzipitat umfassend Calciumfluorid (CaF₂) oder Magnesiumfluorid (MgF₂) umfasst;
Trennen des Präzipitats von dem wässrigen Gemisch, um eine Ca-, Mg-reduzierte Salzlösung zu bilden; und
Unterwerfen der Ca-, Mg-reduzierten Salzlösung einer Oxidation in überkritischem Wasser (SCWO).

2. Verfahren nach Anspruch 1, wobei das PFAS-haltige Wasser einen pH-Wert von 6,0 oder höher aufweist.

3. Verfahren nach Anspruch 1, wobei das PFAS-haltige Wasser einen pH-Wert von wenigstens 6,8 aufweist.

4. Verfahren nach Anspruch 1, wobei der Schritt des Zugebens einer organischen Säure den pH-Wert auf 5,5 oder weniger senkt.

5. Verfahren nach Anspruch 1, wobei der Schritt des Zugebens einer organischen Säure den pH-Wert in den Bereich von 4,5 bis 5,5 senkt.

6. Verfahren nach Anspruch 1, wobei der Schritt des Zugebens einer organischen Säure den pH-Wert in den Bereich von 4,7 bis 5,2 senkt.

7. Verfahren nach einem der Ansprüche 1-6, wobei der Schritt des Zugebens einer organischen Säure eine Mehrzahl von Zugabeschritte mit einem Trennschritt zwischen den Zugabeschritten umfasst.

8. Verfahren nach einem der vorstehenden Ansprüche, wobei der Trennschritt eines oder eine beliebige Kombination umfasst von: Filtrieren, Zentrifugieren und Dekantieren.

9. Verfahren nach einem der vorstehenden Ansprüche, wobei das abgetrennte Präzipitat gewaschen wird und die erhaltene Waschlösung SCWO unterworfen wird.

10. Verfahren nach einem der vorstehenden Ansprüche, wobei die organische Säure einen pKa-Wert zwischen 3,0 und 6,0 aufweist.

11. Verfahren nach Anspruch 10, wobei die organische Säure einen pKa-Wert zwischen 3,5 und 5,5 aufweist.

12. Verfahren nach einem der vorstehenden Ansprüche, wobei die organische Säure Ameisensäure, Essigsäure, Propionsäure, Milchsäure, Gluconsäure, Citronensäure oder Kombinationen davon umfasst.

## Revendications

1. Procédé de destruction de PFAS, comprenant :
ajout d'un acide organique à de l'eau contenant PFAS comprenant du Ca ou du Mg ou à la fois du Ca et du Mg pour former une solution acidifiée ;
combinaison de la solution acidifiée avec du fluorure de sodium ;
dans lequel l'étape de combinaison conduit à un mélange aqueux comprenant PFAS et un précipité comprenant du fluorure de calcium (CaF₂) ou du fluorure de magnésium (MgF₂) ;
séparation du précipité du mélange aqueux pour former une solution saline à teneur réduite en Ca, Mg ; et
soumission de la solution saline à teneur réduite en Ca, Mg à une oxydation dans de l'eau supercritique (SCWO).

2. Procédé selon la revendication 1, dans lequel l'eau contenant PFAS a un pH de 6,0 ou plus.

3. Procédé selon la revendication 1, dans lequel l'eau contenant PFAS a un pH d'au moins 6,8.

4. Procédé selon la revendication 1, dans lequel l'étape d'ajout d'un acide organique abaisse le pH jusqu'à 5,5 ou moins.

5. Procédé selon la revendication 1, dans lequel l'étape d'ajout d'un acide organique abaisse le pH dans la plage de 4,5 à 5,5.

6. Procédé selon la revendication 1, dans lequel l'étape d'ajout d'un acide organique abaisse le pH dans la plage de 4,7 à 5,2.

7. Procédé selon l'une quelconque des revendications 1-6, dans lequel l'étape d'ajout d'un acide organique comprend une pluralité d'étapes d'ajout comportant une étape de séparation entre les étapes d'ajout.

8. Procédé selon l'une quelconque des revendications précédentes, dans lequel l'étape de séparation comprend une ou une combinaison quelconque de : filtration, centrifugation ou décantation.

9. Procédé selon l'une quelconque des revendications précédentes, dans lequel le précipité séparé est lavé et la solution de lavage résultante est soumise à SCWO.

10. Procédé selon l'une quelconque des revendications précédentes, dans lequel l'acide organique a un pKa entre 3,0 et 6,0.

11. Procédé selon la revendication 10, dans lequel l'acide organique a un pKa entre 3,5 et 5,5.

12. Procédé selon l'une quelconque des revendications précédentes, dans lequel l'acide organique comprend l'acide formique, l'acide acétique, l'acide propionique, l'acide lactique, l'acide gluconique, l'acide citrique, ou leurs combinaisons.
